# EUROPEAN PATENT SPECIFICATION

(11) **EP 4 357 386 B1**
(45) Date of publication and mention of the grant of the patent: **29.10.2025**
(21) Application number: 22853485.5
(22) Date of filing: 04.08.2022
(51) Int. Cl.: C08G 63/02, C08G 63/08, C08G 63/78

(54) **POLY(3-HYDROXYPROPIONIC ACID) BLOCK COPOLYMER, MANUFACTURING METHOD THEREOF AND PRODUCTS CONTAINING THE SAME**
POLY(3-HYDROXYPROPIONSÄURE)BLOCK-COPOLYMER, VERFAHREN ZU SEINER HERSTELLUNG UND PRODUKTE, DIE ES ENTHALTEN
COPOLYMÈRE À BLOCS DE L'ACIDE POLY(3-HYDROXYPROPIONIQUE), SON PROCÉDÉ DE FABRICATION ET LES PRODUITS LE CONTENANT

(30) Priority: 04.08.2021 KR 20210102547; 03.08.2022 KR 20220096678
(43) Date of publication of application: 24.04.2024
(73) Proprietor: LG Chem, Ltd., Seoul 07336 (KR)
(72) Inventor: LEE, Yeonju, Daejeon 34122 (KR); CHO, Suhyun, Daejeon 34122 (KR); KANG, Donggyun, Daejeon 34122 (KR); CHOI, Jong Young, Daejeon 34122 (KR); KIM, Chul Woong, Daejeon 34122 (KR); JEON, Harim, Daejeon 34122 (KR)
(74) Representative: Goddar, Heinz J.
(86) International application number: PCT/KR2022/011553
(87) International publication number: WO 2023/014109

(56) References cited:
- JP-A- S58 111 870
- KR-A- 20170 028 189
- KR-A- 20200 115 165
- LAKSHMI TRIPATHI, WU LIN-PING, MENG DECHUAN, CHEN JINCHUN, CHEN GUO-QIANG: "Biosynthesis and Characterization of Diblock Copolymer of P(3-Hydroxypropionate)- block -P(4-hydroxybutyrate) from Recombinant Escherichia coli", BIOMACROMOLECULES, AMERICAN CHEMICAL SOCIETY, US, vol. 14, no. 3, 25 January 2013 (2013-01-25), US , pages 862 - 870, XP055743450, ISSN: 1525-7797, DOI: 10.1021/bm3019517
- JULIEN RAMIER, RENARD ESTELLE, GRANDE DANIEL: "Microwave-Assisted Synthesis and Characterization of Biodegradable Block Copolyesters Based on Poly(3-hydroxyalkanoate)s and Poly(D,L-lactide", JOURNAL OF POLYMER SCIENCE PART A: POLYMER CHEMISTRY, JOHN WILEY & SONS, INC., US, vol. 50, no. 7, 1 April 2012 (2012-04-01), US , pages 1445 - 1455, XP055743447, ISSN: 0887-624X, DOI: 10.1002/pola.25916

## Description

### TECHNICAL FIELD

The present disclosure relates to a poly(3-hydroxypropionic acid) block copolymer, a manufacturing method thereof and products containing the same.

### BACKGROUND ART

Poly(3-hydroxypropionic acid) is a biodegradable polymer, and has not only the property of not cracking easily but also excellent mechanical properties, and thus is attracting attention as an environmentally friendly material.

Poly(3-hydroxypropionic acid) is produced by performing a polycondensation of 3-hydroxypropionic acid (3-HP) as a monomer. Considering industrial applicability, poly(3-hydroxypropionic acid) having excellent thermal stability should be produced. However, the chain of the poly(3-hydroxypropionic acid) contains an ester structure, and the ester structure has a thermal decomposition temperature of about 220°C, and therefore, there is a limit in improving thermal stability.

In addition, poly(3-hydroxypropionic acid) having a high molecular weight can be produced to thereby improve a thermal stability, but in the process of polycondensation of 3-hydroxypropionic acid, a low molecular weight cyclic structure is generated, which not only makes it impossible to produce high molecular weight poly(3-hydroxypropionic acid), but also reduces the production yield of poly(3-hydroxypropionic acid).

Therefore, the present inventors have found that when lactone, lactide, or a combination thereof is added to 3-hydroxypropionic acid as a monomer to produce a copolymer, the thermal properties, crystallinity, and tensile properties of the produced biodegradable polymer can be controlled by varying the number of carbon atoms present in the lactone ring, the presence or absence of branches, and the type of branched chain, and completed the present disclosure.

KR 20200115165 A discloses a method for preparing a block copolymer, comprising a step of ring-opening polymerization of lactide monomers in the presence of a poly(3-hydroxypropionate) initiator to prepare a polylactide-poly(3-hydroxypropionate) block copolymer.

### BRIEF DESCRIPTION

### Technical Problem

It is an object of the present disclosure to provide a poly(3-hydroxypropionic acid) block copolymer having controlled thermal properties and tensile properties while maintaining the intrinsic properties of polypropionic acid, and a manufacturing method thereof.

### Technical Solution

In order to achieve the above object, according to the present disclosure, provided is a poly(3-hydroxypropionic acid) block copolymer.

The poly(3-hydroxypropionic acid) block copolymer according to the present disclosure comprises a repeating unit of the following Chemical Formula 1, which is a repeating unit of 3-hydroxypropionic acid; and a repeating unit of the following Chemical Formula 2, which is a repeating unit of lactone, wherein the number of repeating units of the Chemical Formula 1 is an integer of 100 to 5000, wherein the number of repeating units of the Chemical Formula 2 is an integer of 100 to 5000, and L in the Chemical Formula 2 is a linear or branched alkyl having 3 to 10 carbon atoms:

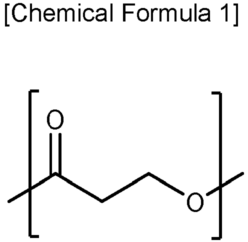

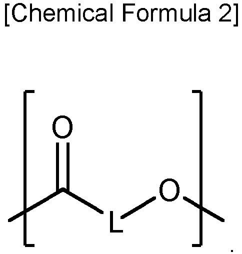

Also, provided is a method of manufacturing a poly(3-hydroxypropionic acid) block copolymer according to the present disclosure, comprising polymerizing 3-hydroxypropionic acid to produce a 3-hydroxypropionic acid oligomer (step 1); polymerizing the 3-hydroxypropionic acid oligomer to produce poly(3-hydroxypropionic acid) (step 2); and performing a ring-opening polymerization of lactone having 3 to 10 carbon atoms using the poly(3-hydroxypropionic acid) as an initiator (step 3).

Further embodiments are disclosed in the dependent claims.

### ADVANTAGEOUS EFFECTS

As described above, the poly(3-hydroxypropionic acid) block copolymer according to the present disclosure has the characteristic that by introducing 3-hydroxypropionic acid and a lactone monomer or further an lactide monomer, various physical properties such as thermal properties, crystallinity and tensile properties of the biodegradable polymer can be improved, and its application fields can be expanded.

### DETAILED DESCRIPTION

The present disclosure aims at providing a poly(3-hydroxypropionic acid) block copolymer. Hereinafter, the poly(3-hydroxypropionic acid) block copolymer of the present disclosure will be described in detail as follows.

First, the poly(3-hydroxypropionic acid) block copolymer of the present disclosure comprises a repeating unit of the following Chemical Formula 1, which is a repeating unit of 3-hydroxypropionic acid; and a repeating unit of the following Chemical Formula 2, which is a repeating unit of lactone, wherein the number of repeating units of the Chemical Formula 1 is an integer of 100 to 5000, wherein the number of repeating units of the Chemical Formula 2 is an integer of 100 to 5000, and L in the Chemical Formula 2 is a linear or branched alkyl having 3 to 10 carbon atoms:

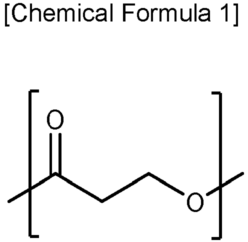

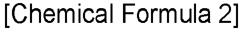

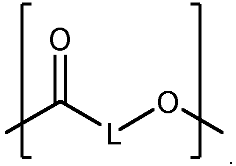

An example of the poly(3-hydroxypropionic acid) block copolymer including the repeating unit of Chemical Formula 1 and the repeating unit of Chemical Formula 2 can be the following Chemical Formula 4.

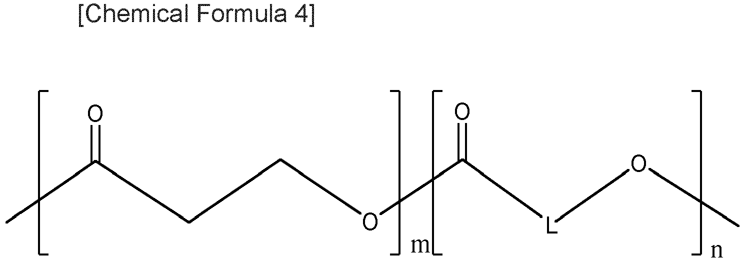

Further, when ε-caprolactone is used as lactone, which is the repeating unit of Chemical Formula 2, the Chemical Formula 4 can be represented by following Chemical Formula 4-1.

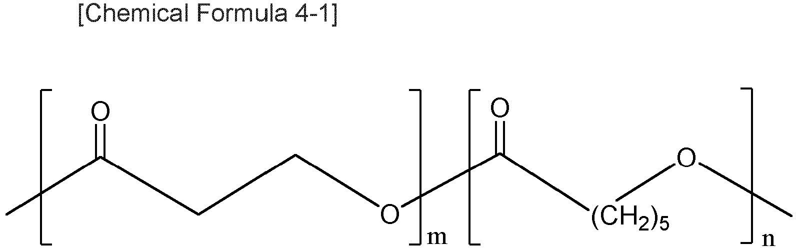

Further, when γ-octanoic lactone is used as lactone, which is the repeating unit of Chemical Formula 2, the Chemical Formula 4 can be represented by following Chemical Formula 4-2.

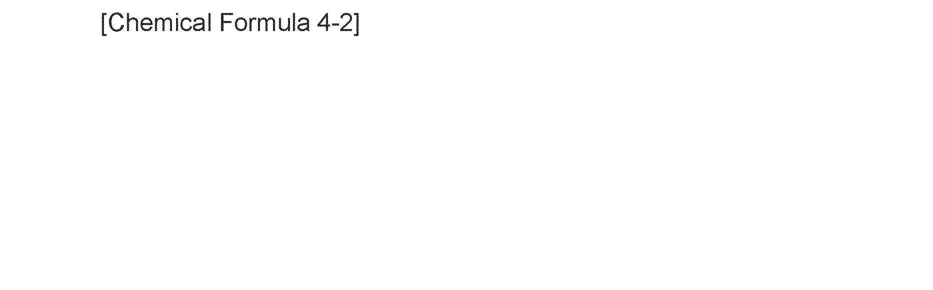

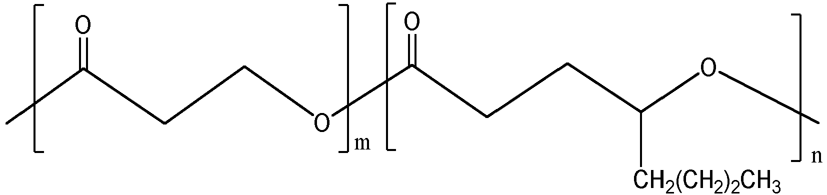

The poly(3-hydroxypropionic acid) block copolymer further comprises a repeating unit of Chemical Formula 3, which is a repeating unit of lactide, and the number of repeating units of Chemical Formula 3 can be an integer of 100 to 5000:

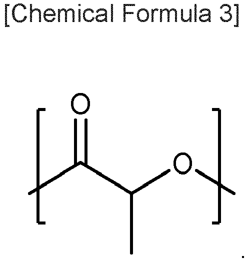

An example of the poly(3-hydroxypropionic acid) block copolymer further comprising the repeating unit of Chemical Formula 3 can be the following Chemical Formula 5.

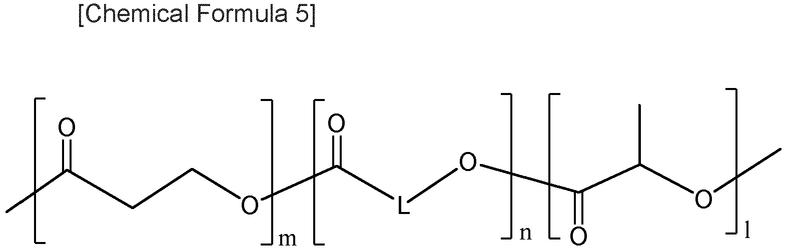

The term 'poly(3-hydroxypropionic acid) 'block copolymer' as used herein is a block copolymer in which a lactone-derived monomer, a 3-hydroxypropionic acid-derived monomer and additionally a lactide-derived monomer are polymerized in block units. In particular, according to the present disclosure, by introducing a lactone-derived monomer, crystallization properties can be controlled in accordance with the number of carbon atoms present in the lactone ring and the presence or absence of introduction of a branched structure, thereby being capable of adjusting crystallization and tensile physical properties, etc.

In addition, the present disclosure is characterized in that it necessarily includes 3-hydroxypropionic acid monomer, unlike conventional PLA (polylactic acid), and includes a lactone-derived monomer, a lactide-derived monomer, or a combination thereof.

Further, the present disclosure provides a method of manufacturing the above-mentioned poly(3-hydroxypropionic acid) block copolymer comprising a step of polymerizing 3-hydroxypropionic acid polymer and lactone using a catalyst.

The 3-hydroxypropionic acid polymer means a homopolymer of 3-hydroxypropionic acid.

Specifically, the method for manufacturing poly(3-hydroxypropionic acid-b-lactone) of the present disclosure comprises polymerizing 3-hydroxypropionic acid to produce a 3-hydroxypropionic acid oligomer (step 1); polymerizing the 3-hydroxypropionic acid oligomer to produce poly(3-hydroxypropionic acid) (step 2); and performing a ring-opening polymerization of lactone having 3 to 10 carbon atoms using the poly(3-hydroxypropionic acid) as an initiator (step 3).

The (step 3) can further include providing a lactide monomer.

When lactide is further included as a monomer in (step 3), the lactide can be included in an amount of 40 parts by weight to 99 parts by weight based on 100 parts by weight of the total weight of lactone and lactide. For example, the lactide can be included in an amount of 40 parts by weight or more, 50 parts by weight or more, 60 parts by weight or more, or 70 parts by weight or more and 99 parts by weight or less, 90 parts by weight or less, or 80 parts by weight or less based on 100 parts by weight of the total weight of lactone and lactide.

When lactide is further included as a monomer, the degree of improvement in thermal and mechanical properties of the block copolymer may not be significant if the lactide content is too low.

Further, when lactide is further included as a monomer in the (step 3), the (step 3) can include polymerizing lactide using the poly(3-hydroxypropionic acid) as an initiator (step 3-1); and further performing a ring-opening polymerization of a lactone having 3 to 10 carbon atoms to poly(3-hydroxypropionic acid) and a lactide polymer (step 3-2). If lactide is polymerized first and then lactone is polymerized, a block copolymer can be obtained in which 3-hydroxypropionic acid-derived repeating units, lactide-derived repeating units, and lactone-derived repeating units are each polymerized to form a block. The block copolymer is different from the random copolymer in that it has higher crystallinity.

Meanwhile, lactone can be included in an amount of 1 part by weight to 60 parts by weight based on 100 parts by weight of the total weight of lactone and lactide. For example, lactone can be included in an amount of 1 part by weight or more, 5 parts by weight or more, 10 parts by weight or more, or 20 parts by weight or more to 60 parts by weight or less, 50 parts by weight or less, 40 parts by weight or less, or 30 parts by weight or less based on 100 parts by weight of the total weight of lactone and lactide.

In the (step 3), poly(3-hydroxypropionic acid) can be included in an amount of 50 parts by weight or less based on 100 parts by weight of the total weight of the reactants. The reactants of the (step 3) can be poly(3-hydroxypropionic acid) and lactone or poly(3-hydroxypropionic acid), lactone and lactide. Specifically, in the (step 3), poly(3-hydroxypropionic acid) can be included in an amount of 50 parts by weight or less, 40 parts by weight or less, 30 parts by weight or less, 20 parts by weight or less, 17 parts by weight or less, or 10 parts by weight or less to more than 0 parts by weight, 5 parts by weight or more, or 9 parts by weight or more based on 100 parts by weight of the total weight of the reactants.

If the content of poly (3-hydroxypropionic acid) does not satisfy the above range, there can be minor problems that the effect of improving various physical properties such as thermal properties, crystallinity, and tensile properties due to the use of lactone can be insignificant.

The (step 2) is a step of polymerizing the 3-hydroxypropionic acid oligomer at a pressure of 133 Pa (1 torr) or less for 12 hours to 48 hours. Preferably, the polymerization is performed under a pressure of 26.6 Pa (0.2 torr) or less for 22 hours to 26 hours.

The lactone having 3 to 10 carbon atoms in (step 3) can be at least one selected from the group consisting of ε-caprolactone, β-butyrolactone, β-valerolactone, γ-butyrolactone, δ-valerolactone, γ-valerolactone, trimethylenecarbonate, p-dioxanone, δ-haxalactone, δ-caprolactone, mevalonolactone, γ-octanoic lactone, and γ-nonanoic lactone.

Since the (step 3) is accompanied by a ring-opening polymerization reaction of lactone or further lactide, it is performed in the presence of a ring-opening catalyst. As an example, the catalyst can be a catalyst of the following Chemical Formula 6.

[Chemical Formula 6] MA¹ₚA²₂₋ₚ

wherein, Chemical Formula 6:
M is Al, Mg, Zn, Ca, Sn, Fe, Y, Sm, Lu, Ti or Zr;
p is an integer of 0 to 2; and
A¹ and A² are each independently an alkoxy or carboxyl group.

More specifically, the catalyst of Chemical Formula 6 can be tin(II) 2-ethylhexanoate (Sn(Oct)₂).

Preferably, the amount of the catalyst used can be 0.001 to 10 mol%, 0.01 to 5 mol%, 0.01 to 1 mol%, assuming that the total number of moles of lactone is 100 mol%.

Preferably, the (step 3) is performed at a temperature of 140 to 190°C. Preferably, the manufacturing method is performed for 5 minutes to 10 hours, more preferably for 1 hour to 3 hours.

Further, the present disclosure can provide a resin comprising the above-mentioned poly(3-hydroxypropionic acid) block copolymer.

Further, the present disclosure can provide a resin composition comprising the resin. The resin composition can further include other additives for improving physical properties in addition to the resin.

Further, the resin composition can be molded into one or more resin molded articles selected from the group consisting of an injection molded article, an extrusion molded article, a blow molded article, an inflation, a fiber, a nonwoven fabric, a foam, a sheet, and like.

Further, the present disclosure provides an article comprising the above-mentioned poly(3-hydroxypropionic acid) block copolymer. The article can be an electronic material, a building material, a food packaging, a food container (disposable cup, tray, etc.), an industrial article, an agricultural article (e.g., mulching film), and the like.

A resin, a resin composition, and an article comprising the poly(3-hydroxypropionic acid) block copolymer can further include two or more different types of lactones or additional comonomers depending on the required physical properties.

### EXAMPLES

The present disclosure is described in more detail with reference to examples below. However, the following examples is for illustrative purposes only, and are not intended to limit the contents of the present disclosure.

### Comparative Example 1

3-Hydroxypropionic acid present in an aqueous solution was dried at 90°C and 13300 Pa (100 torr) to obtain 60 g of dried 3-hydroxypropionic acid. 0.2 mol% of catalyst p-TSA (p-toluenesulfonic acid) was added to the dried 3-hydroxypropionic acid, and the mixture was reacted at 90°C and 1330 Pa (10 torr) for 2 hours. Then, the degree of vacuum was changed to 26.6 Pa (0.2 torr) and reaction was performed for 5 hours, and then 0.05 mol% of Sn(Oct)₂ catalyst was added and reacted for a total of 24 hours to obtain a poly(3-hydroxypropionic acid) oligomer.

### Example 1

The catalyst Sn(Oct)₂ (17 µl, 0.03 mol%) was added to the vacuum-dried poly(3-hydroxypropionic acid) (2g) of Comparative Example 1 and the dried ε-caprolactone (20g), and reacted at 140°C for 3 hours to polymerize a copolymer. The polymerized copolymer was vacuum-dried at room temperature for 2 hours in order to remove moisture absorbed during the process, and the product was taken out from a reactor and devolatilized at 50°C for 4 hours to remove residual monomers.

### Example 2

The vacuum-dried poly(3-hydroxypropionic acid) (2 g) of Comparative Example 1 and the dried ε-caprolactone (20 g) were placed in a reactor. Then, catalyst Sn(Oct)₂ (17 µl , 0.03 mol%) was added thereto and reacted at 140°C for 4 hours to polymerize a copolymer. The polymerized copolymer was vacuum-dried at room temperature for 2 hours in order to remove moisture absorbed during the process, and then the product was taken out from the reactor and devolatilized at 50°C for 4 hours to remove residual monomers.

### Example 3

The vacuum-dried poly(3-hydroxypropionic acid) (4 g) of Comparative Example 1 and the dried ε-caprolactone (20 g) were placed in a reactor. Then, catalyst Sn(Oct)₂ (17 µl , 0.03 mol%) was added thereto and reacted at 140°C for 4 hours to polymerize a copolymer. The polymerized copolymer was vacuum-dried at room temperature for 2 hours in order to remove moisture absorbed during the process, and then the product was taken out from the reactor and devolatilized at 50°C for 4 hours to remove residual monomers.

### Example 4

The vacuum-dried poly(3-hydroxypropionic acid) (4 g) of Comparative Example 1 and the dried ε-caprolactone (20 g) were placed in a reactor. Then, catalyst Sn(Oct)₂ (17 µl , 0.03 mol%) was added thereto and reacted at 140°C for 5 hours to polymerize a copolymer. The polymerized copolymer was vacuum-dried at room temperature for 2 hours in order to remove moisture absorbed during the process, and then the product was taken out from the reactor and devolatilized at 50°C for 4 hours to remove residual monomers.

### Example 5

The vacuum-dried poly(3-hydroxypropionic acid) (1.88 g) of Comparative Example 1, the dried β-butyrolactone (3.84 g) and the dried lactide (15 g) were placed in a reactor. Then, catalyst Sn(Oct)₂ (14 µl , 0.03 mol%) was added thereto and reacted at 180°C for 1.5 hours to polymerize a copolymer. The polymerized copolymer was vacuum-dried at room temperature for 2 hours in order to remove moisture absorbed during the process, and then the product was taken out from the reactor and devolatilized at 140°C for 4 hours to remove residual monomers.

### Example 6

The vacuum-dried poly(3-hydroxypropionic acid) (2 g) of Comparative Example 1, the dried ε-caprolactone (4 g) and the dried lactide (16 g) were placed in a reactor. Then, catalyst Sn(Oct)₂ (14 µl , 0.03 mol%) was added thereto and reacted at 180°C for 1 hour to polymerize a copolymer. The polymerized copolymer was vacuum-dried at room temperature for 2 hours in order to remove moisture absorbed during the process, and then the product was taken out from the reactor and devolatilized at 50°C for 4 hours to remove residual monomers.

### Example 7

The vacuum-dried poly(3-hydroxypropionic acid) (2 g) of Comparative Example 1, the dried ε-caprolactone (10 g) and the dried lactide (10 g) were placed in a reactor. Then, catalyst Sn(Oct)₂ (15 µl , 0.03 mol%) was added thereto and reacted at 180°C for 1.5 hours to polymerize a copolymer. The polymerized copolymer was vacuum-dried at room temperature for 2 hours in order to remove moisture absorbed during the process, and then the product was taken out from the reactor and devolatilized at 50°C for 4 hours to remove residual monomers.

### Example 8

The vacuum-dried poly(3-hydroxypropionic acid) (2 g) of Comparative Example 1 and the dried lactide (16 g) were placed in a reactor. Then, catalyst Sn(Oct)₂ (14µl , 0.03 mol%) was added thereto and reacted at 180°C for 0.5 hour. Then, the dried ε-caprolactone (4 g) was added thereto and reacted for an additional 0.5 hours to polymerize a copolymer. The polymerized copolymer was vacuum-dried at room temperature for 2 hours in order to remove moisture absorbed during the process, and then the product was taken out from the reactor and devolatilized at 50°C for 4 hours to remove residual monomers.

### Example 9

The vacuum-dried poly(3-hydroxypropionic acid) (2 g) of Comparative Example 1 and the dried lactide (10 g) were placed in a reactor. Then, catalyst Sn(Oct)₂ (15 µl , 0.03 mol%) was added thereto and reacted at 180°C for 0.5 hour. Then, the dried ε-caprolactone (10 g) was added thereto and reacted for an additional 1 hour to polymerize a copolymer. The polymerized copolymer was vacuum-dried at room temperature for 2 hours in order to remove moisture absorbed during the process, and then the product was taken out from the reactor and devolatilized at 50°C for 4 hours to remove residual monomers.

### Comparative Example 2

The vacuum-dried poly(3-hydroxypropionic acid) (4 g) of Comparative Example 1 and the dried lactide (40 g) were placed in a reactor. Then, catalyst Sn(Oct)₂ (18 µl , 0.03 mol%) was added thereto and reacted at 180°C for 1 hour to polymerize a copolymer. The polymerized copolymer was vacuum-dried at room temperature for 2 hours in order to remove moisture absorbed during the process, and then the product was taken out from the reactor and devolatilized at 140°C for 4 hours to remove residual monomers.

### Comparative Example 3

The dried ε-caprolactone (40 g) and catalyst Sn(Oct)₂ (11 µl, 0.01 mol%) were added to octanol (110 µl, 0.2 mol%) and reacted at 140°C for 4 hours to polymerize a copolymer. The polymerized copolymer was vacuum-dried at room temperature for 2 hours in order to remove moisture absorbed during the process, and then the product was taken out from the reactor and devolatilized at 140°C for 4 hours to remove residual monomers.

### Comparative Example 4

The dried β-butyrolactone (5.2 g), the dried lactide (20 g) and catalyst Sn(Oct)₂ (6 µl , 0.01 mol%) were added to octanol (140 µl, 0.2 mol%) and reacted at 180°C for 1 hour to polymerize a copolymer. The polymerized copolymer was vacuum-dried at room temperature for 2 hours in order to remove moisture absorbed during the process, and then the product was taken out from the reactor and devolatilized at 140°C for 4 hours to remove residual monomers.

### Comparative Example 5

The dried ε-caprolactone (7.9 g), the dried lactide (40 g) and catalyst Sn(Oct)₂ (11 µl, 0.01 mol%) were added to octanol (109 µl, 0.2 mol%) and reacted at 190°C for 1 hour to polymerize a copolymer. The polymerized copolymer was vacuum-dried at room temperature for 2 hours in order to remove moisture absorbed during the process, and then the product was taken out from the reactor and devolatilized at 50°C for 4 hours to remove residual monomers.

### Comparative Example 6

The dried lactide (40 g) and catalyst Sn(Oct)₂ (11 µl, 0.01 mol%) were added to octanol (109 µl, 0.2 mol%) and reacted at 180°C for 1 hour. Then, ε-caprolactone (7.9 g) was added thereto and reacted at 180°C for 1 hour to polymerize the copolymer. The polymerized copolymer was vacuum-dried at room temperature for 2 hours in order to remove moisture absorbed during the process, and then the product was taken out from the reactor and devolatilized at 50°C for 4 hours to remove residual monomers.

The molecular weight and thermal properties of the polymers prepared in Examples 1 to 9 and Comparative Examples 1 to 6 were measured, and shown in Table 1 below. This is to investigate how the thermal properties of the polymerized copolymer change with the addition of lactone or lactone and lactide as a comonomer to 3-hydroxypropionic acid as compared to the existing poly(3-hydroxypropionic acid), that is, how the thermal properties are controlled, and not to show that a specific polymer is inferior.

Each measurement method is as follows.

### Experiment 1- GPC Measurement

Water e2695 model equipment and Agilent Plgel mixed c and b columns were used. Chloroform was used as an eluent, measurement was performed at a flow rate of 1 ml/min at 40 degrees, and the relative molecular weight was measured using polystyrene as a standard. Samples were prepared at 4 mg/ml with chloroform as solvent, and 50 µl was injected for measurement.

### Experiment 2- DSC Measurement

Measurements were performed under nitrogen gas flow using TA DSC250 model equipment. The temperature was raised from 40°C to 220°C at 5°C/min (1st heating), and the temperature was maintained at 220°C for 10 minutes. Then, it was cooled from 220°C to -70°C at 5°C/min (1st cooling), and the temperature was maintained at -70°C for 10 minutes. Then, the temperature was raised from -70°C to 220°C at 5°C/min (2nd heating) for measurement.

**[Table 1]**

| Entry | GPC | | | DSC analysis | | | | | | |
|---|---|---|---|---|---|---|---|---|---|---|
| | Mn (g/mol) | Mw (g/mol) | PDI | Tc | | Tg | Cold crystallization | | Tm | |
| | | | | Tempera ture (°C) | ΔH (J/g) | Temperat ure (°C) | Temperat ure (°C) | ΔH (J/g) | Tempera ture (°C) | ΔH (J/g) |
| Comp. Ex. 1 | 13300 | 29000 | 2.18 | 32 | 65.2 | -20 | N.D | N.D | 71.9 | 69.4 |
| Comp. Ex. 2 | 60200 | 164200 | 2.72 | 97.1 | 38.8 | 50.9 | N.D | N.D | 174 | 41.0 |
| Comp. Ex. 3 | 147900 | 220800 | 1.49 | 29.0 | 53.5 | -54 | N.D | N.D | 55.6 | 55.3 |
| Comp. Ex. 4 | 31800 | 68600 | 2.16 | 96.2 | 2.8 | 53.2 | 108.55 | 30.1 | 167.0 | 36.7 |
| Comp. Ex. 5 | 106200 | 183800 | 1.73 | N.D | N.D | 20.9 | 91.15 | 2.8 | 158.4 | 14.05 |
| Comp. Ex. 6 | 51800 | 65400 | 1.26 | 103 | 31.7 | -40.6 | N.D | N.D | 169.1 | 33.0 |
| Ex. 1 | 58500 | 108000 | 1.85 | 32.2 | 43.1 | -56.5 | N.D | N.D | 54 | 42.1 |
| Ex. 2 | 72100 | 136600 | 1.9 | 29.1 | 50.9 | -55.0 | N.D | N.D | 53.7 | 46.5 |
| Ex. 3 | 33300 | 63400 | 1.9 | 27.9 | 52.3 | -55.2 | N.D | N.D | 52.2 | 47.7 |
| Ex. 4 | 54400 | 105900 | 2.0 | 30.2 | 50.7 | -52.7 | N.D | N.D | 52.6 | 46.7 |
| Ex. 5 | 27700 | 86000 | 3.1 | 84.4 | 7.5 | 38.1 | 80 | 15.1 | 163.8 | 36.5 |
| Ex. 6 | 49100 | 124800 | 2.6 | N.D | N.D | 29.9 | 99 | 20.1 | 149.4 | 19.2 |
| Ex. 7 | 41100 | 101322 | 2.6 | N.D | N.D | -10.3 | N.D | N.D | N.D | N.D |
| Ex. 8 | 44600 | 138550 | 2.5 | N.D | N.D | 29.4 | 90 | 17.4 | 158.3 | 5.7 |
| Ex. 9 | 38800 | 93074 | 2.4 | N.D | N.D | -17.7 | 63.9 | 8.8 | 143.1 | 12.6 |

| | | | | | | | | | | |
|---|---|---|---|---|---|---|---|---|---|---|
| *N.D: not measured | | | | | | | | | | |

Comparing Comparative Examples 2 and 3 with Examples 2 to 4, measured Tg and Tm of Comparative Example 3 and Examples 2 to 4 were lower than Comparative Example 2, confirming that since the content of poly(3-hydroxypropionic acid) is 10 or 20 parts by weight based on 100 parts by weight of the total weight of the reactants, Examples 2 to 4 followed the thermal properties of Comparative Example 3, which is polycaprolactone. Therefore, it was confirmed that poly(3-hydroxypropionic acid) was imparted with the thermal properties of polylactone.

Comparing Comparative Example 4 and Example 5, it was confirmed that the crystallization rate of Example 5 increased (the amount of change in enthalpy of T_{c} increased from 2.8 J/g to 7.5 J/g), and the enthalpy decreased from 30.1 J/g to 15.1 J/g in cold crystallization. Also compared with Comparative Example 1, it was confirmed that poly(3-hydroxypropionic acid) is imparted with the thermal properties of polylactone and polylactide.

Comparing Comparative Examples 5 and 6 with Examples 6 to 9, when lactide is included in an amount of 80 parts by weight based on 100 parts by weight of total lactone and lactide (Examples 6 and 8), there was no significant difference between random polymerization and block polymerization of lactide monomers.

However, when lactide is included in an amount of 50 parts by weight based on 100 parts by weight of the total weight of lactone and lactide (Examples 7 and 9), it was confirmed that Example 9, in which the lactide monomer was block-polymerized, showed crystallinity, whereas in Example 7 in which the lactide monomer was randomly polymerized, the Tm was not measured, and it did not show crystallinity and had a gum-like state. In the case of Example 9 block-polymerized with the same composition, the crystallinity was lowered (ΔH of Tm was 12.6 J/g), but Tm was measured.

Comparing Examples 6 and 8, it was confirmed that in Example 6 in which lactide monomer was randomly polymerized, ΔH of Tm was measured as 19.2 J/g, which is low in crystallinity as compared to that of block-polymerized Example 8 in which ΔH of Tm is 5.7 J / g.

Looking at Tg, Tm, cold crystallization (2nd heating result) and Tc (1st cooling result), it was confirmed that generally, if the crystallization rate is high, the enthalpy of Tc is large, and the temperature of cold crystallization is low or not measured, and if the crystallinity is high, the enthalpy of Tm is higher. If the crystallinity is high, generally, the strength of the material increases, but it is brittle and has no elasticity. However, since elasticity is generally known to be created by voids between polymer chains, the use of branched structures as monomers can lower crystallinity and reduce brittleness.

The mechanical properties of the polymers prepared in Examples 1 to 9 and Comparative Examples 1 to 6 were measured and shown in Table 2 below.

Each measurement method is as follows.

### Experiment 3: Dog-bone processability

The dog-bone mold was preheated in a heated hot press for 2 minutes, and then the polymer was injected, and processed for 2 minutes to prepare a dog-bone. At this time, in Comparative Examples 1, 3 and Examples 1 to 4, the hot press temperature was set to 90°C, and in Comparative Examples 2, 4 to 6 and Examples 5 to 9, the hot press temperature was set to 180°C. The dog-bone standard was set to length (64 cm), width (1 cm, 0.3 cm), and thickness (1 mm) according to ASTM 638.

### Experiment 4: Mechanical Properties

The specimen was pulled at a speed of 5 mm/min using an Instron 5982 model instrument using a weight of 5 kN, and the strength, elastic modulus, and elongation were measured.

### Experiment 5: Optical Characteristics

Each specimen was prepared as a sheet having the thickness shown in Table 2, and then transmittance was measured by attaching to a UV-visible spectrometer (Agilent 8453). At this time, the transmittance value in the 480nm region was confirmed.

**[Table 2]**

| Entry | Dog-bone processability | Mechanical properties | | | Optical properties | |
|---|---|---|---|---|---|---|
| | | Tensile strength (MPa) | Modulus (GPa) | Elongation (%) | Thickness | Transmittance (%) |
| Comparative Example 1 | X | N.A | N.A | N.A | 200 | 77.7 |
| Comparative Example 2 | O | 52.2 | 2.26 | 7.1 | 120 | 93 |
| Comparative Example 3 | O | 11.5 | 0.25 | 950 | 170 | 82.4 |
| Comparative Example 4 | X | N.A | N.A | N.A | 130 | 91.5 |
| Comparative Example 5 | O | 21 | 0.15 | 333 | 130 | 93.2 |
| Comparative Example 6 | O | 18 | 0.99 | 314 | 120 | 92.9 |
| Example 1 | O | 11.0 | 0.15 | 302 | 140 | 75 |
| Example 2 | O | 32.4 | 0.425 | 700 | 150 | 73.5 |
| Example 3 | O | 10.9 | 0.285 | 667 | 135 | 76 |
| Example 4 | O | 29.9 | 0.409 | 785 | 130 | 75.2 |
| Example 5 | O | 39.13 | 2.25 | 1.99 | 120 | 94.2 |
| Example 6 | O | 10.16 | 0.02 | 578 | 140 | 92.7 |
| Example 7 | X | N.A | N.A | N.A | 110 | 95.2 |
| Example 8 | O | 9.81 | 0.02 | 557 | 170 | 92.1 |
| Example 9 | O | 2.9 | 0.02 | 157 | 180 | 91.7 |

| | | | | | | |
|---|---|---|---|---|---|---|
| *N.A not measured | | | | | | |

Comparing Comparative Example 3 with Examples 2 and 4, Examples 2 and 4 showed that through a block copolymerization between poly(3-hydroxypropionic acid) and caprolactam, the tensile strength was increased to 20 MPa or more and the elongation was significantly increased to 600% or more. In particular, Examples 2 and 4, in which a weight average molecular weight was 100,000 g/mol or more, were excellent in both strength and elongation. Example 1 had the same monomer composition, catalyst type, use amount, and reaction temperature as Example 2, but the reaction time was 3 hours, which had a shorter reaction time than Example 2. Therefore, the tensile strength and elongation of Example 1 were shown inferior to those of Example 2, which is because the molecular weight of Example 1, which has a short reaction time, is small and thus entanglement between chains is small. Example 3 also had the same monomer composition, catalyst type, use amount and reaction temperature as Example 4, but the reaction time was 3 hours which is the shorter reaction time than Example 4. Therefore, the tensile strength and elongation of Example 3 were showed inferior to those of Example 4, which is because the molecular weight of Example 3, which also has a short reaction time, is small and thus entanglement between chains is small.

Comparing Comparative Example 4 and Example 5, it was confirmed that in Example 5, butyrolactone was block-copolymerized with poly (3-hydroxypropionic acid), and thus, the thermal processability was improved as compared to Comparative Example 4 in which thermal processing was impossible due to its brittleness. In addition, in Example 5, the copolymerized butyrolactone had a harder property than lactide, and thus the elongation was measured to be very low.

Comparing Comparative Examples 5 and 6 with Examples 6 to 9, it can be confirmed that in addition to caprolactone and lactide, poly(3-hydroxypropionic acid) was copolymerized, and thus, elongation increased from 300% to 600% while maintaining transparency. However, in the case of the sample without crystallinity in Example 7, it showed the same behavior as a gum at room temperature, which makes it difficult to make a dog-bone, and thus, the mechanical properties could not be confirmed. In the case of Example 9, the dog-bone could be manufactured, but is low in crystallinity, defects occurred during the manufacture of the dog-bone, resulting in low mechanical properties.

In addition, comparing Examples 6 and 8 and Examples 7 and 9, it was confirmed that the tensile strength and elongation could be controlled by adjusting the lactone and lactide mixing ratio. It was confirmed that the processability, strength, and elongation can be adjusted depending on whether the structure is random or block.

## Claims

1. A poly(3-hydroxypropionic acid) block copolymer, comprising:
a repeating unit of the following Chemical Formula 1, which is a repeating unit of 3-hydroxypropionic acid; and
a repeating unit of the following Chemical Formula 2, which is a repeating unit of lactone,
wherein the number of repeating units of the Chemical Formula 1 is an integer of 100 to 5000,
wherein the number of repeating units of the Chemical Formula 2 is an integer of 100 to 5000, and
L in the Chemical Formula 2 is a linear or branched alkyl having 3 to 10 carbon atoms:

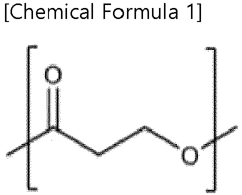

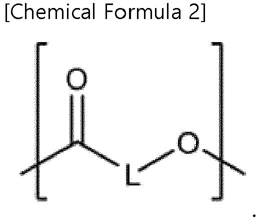

2. The poly(3-hydroxypropionic acid) block copolymer according to claim 1 wherein:
the poly(3-hydroxypropionic acid) block copolymer further comprises:
a repeating unit represented by the following Chemical Formula 3, which is a repeating unit of a lactide,
wherein the number of repeating units of the Chemical Formula 3 is an integer of 100 to 5000:

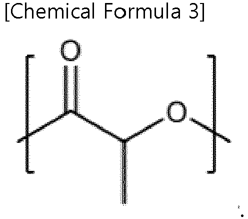

3. A method of manufacturing a poly(3-hydroxypropionic acid) block copolymer, comprising the steps of:
polymerizing 3-hydroxypropionic acid to produce a 3-hydroxypropionic acid oligomer (step 1);
polymerizing the 3-hydroxypropionic acid oligomer to produce poly(3-hydroxypropionic acid) (step 2); and
performing a ring-opening polymerization of lactone having 3 to 10 carbon atoms using the poly(3-hydroxypropionic acid) as an initiator (step 3).

4. The method of claim 3, wherein:
the (step 3) further includes adding a lactide as a monomer.

5. The method of claim 4, wherein:
the lactide is included in an amount of 40 parts by weight to 99 parts by weight based on 100 parts by weight of the total weight of lactone and lactide.

6. The method of claim 3, wherein:
in the (step 3), the poly(3-hydroxypropionic acid) is included in an amount of 50 parts by weight or less based on 100 parts by weight of the total weight of the reactants.

7. The method of claim 3, wherein:
the lactone having 3 to 10 carbon atoms of the (step 3) is at least one selected from the group consisting of ε-caprolactone, β-butyrolactone, β-valerolactone, γ-butyrolactone, δ-valerolactone, γ-valerolactone, trimethylenecarbonate, p-dioxanone, δ-haxalactone, δ-caprolactone, mevalonolactone, γ-octanoic lactone, and γ-nonanoic lactone.

8. The method of claim 3, wherein:
polymerizing the 3-hydroxypropionic acid oligomer in the (step 2) is done under a pressure condition of 133 Pa (1 torr) or less.

9. The method of manufacturing a poly(3-hydroxypropionic acid) block copolymer according to claim 3, wherein:
performing the ring-opening polymerization in the (step 3) is done at a temperature of 140 to 190°C.

10. A resin, comprising the poly(3-hydroxypropionic acid) block copolymer as set forth in claim 1.

11. A resin composition, comprising the resin as set forth in claim 10.

12. The resin composition according to claim 11, wherein:
the resin composition is molded into one or more resin molded articles selected from the group consisting of an injection molded article, an extrusion molded article, a blow molded article, an inflation molded article, a fiber, a nonwoven fabric, a foam, a sheet, and a film.

13. An article, comprising the poly(3-hydroxypropionic acid) block copolymer
as set forth in claim 1.

## Patentansprüche

1. Poly(3-hydroxypropionsäure)-Blockcopolymer, umfassend:
eine Wiederholungseinheit der folgenden chemischen Formel 1, die eine Wiederholungseinheit von 3-Hydroxypropionsäure ist; und
eine Wiederholungseinheit der folgenden chemischen Formel 2, die eine Wiederholungseinheit von Lacton ist,
wobei die Anzahl der Wiederholungseinheiten der chemischen Formel 1 eine ganze Zahl von 100 bis 5000 ist,
wobei die Anzahl der Wiederholungseinheiten der chemischen Formel 2 eine ganze Zahl von 100 bis 5000 ist, und
L in der chemischen Formel 2 ein lineares oder verzweigtes Alkyl mit 3 bis 10 Kohlenstoffatomen ist:

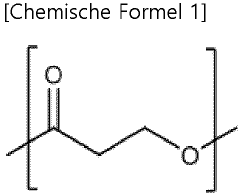

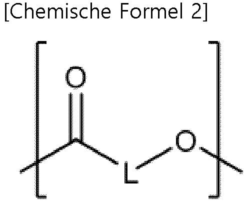

2. Poly(3-hydroxypropionsäure)-Blockcopolymer nach Anspruch 1, wobei:
das Poly(3-hydroxypropionsäure)-Blockcopolymer ferner umfasst:
eine Wiederholungseinheit, dargestellt durch die folgende chemische Formel 3, die eine Wiederholungseinheit von einem Lactid ist,
wobei die Anzahl der Wiederholungseinheiten der chemischen Formel 3 eine ganze Zahl von 100 bis 5000 ist:

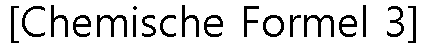

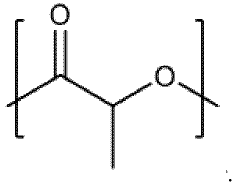

3. Verfahren zur Herstellung eines Poly(3-hydroxypropionsäure)-Blockcopolymers, umfassend die Schritte:
Polymerisieren von 3-Hydroxypropionsäure, um ein 3-Hydroxypropionsäure-Oligomer herzustellen (Schritt 1);
Polymerisieren des 3-Hydroxypropionsäure-Oligomers, um Poly(3-hydroxypropionsäure) herzustellen (Schritt 2); und
Durchführen einer Ringöffnungspolymerisation von Lacton mit 3 bis 10 Kohlenstoffatomen unter Verwendung der Poly(3-hydroxypropionsäure) als Initiator (Schritt 3).

4. Verfahren nach Anspruch 3, wobei:
der (Schritt 3) ferner das Hinzufügen eines Lactids als Monomer beinhaltet.

5. Verfahren nach Anspruch 4, wobei:
das Lactid in einer Menge von 40 Gewichtsteilen bis 99 Gewichtsteilen, bezogen auf 100 Gewichtsteile des Gesamtgewichts von Lacton und Lactid, enthalten ist.

6. Verfahren nach Anspruch 3, wobei:
in dem (Schritt 3) die Poly(3-hydroxypropionsäure) in einer Menge von 50 Gewichtsteilen oder weniger, bezogen auf 100 Gewichtsteile des Gesamtgewichts der Reaktanten, enthalten ist.

7. Verfahren nach Anspruch 3, wobei:
das Lacton mit 3 bis 10 Kohlenstoffatomen des (Schritts 3) mindestens eines ist, ausgewählt aus der Gruppe, bestehend aus ε-Caprolacton, β-Butyrolacton, β-Valerolacton, γ-Butyrolacton, δ-Valerolacton, γ-Valerolacton, Trimethylencarbonat, p-Dioxanon, δ-Heptanolacton, δ-Caprolacton, Mevalonolacton, γ-Octanolacton und γ-Nonanolacton.

8. Verfahren nach Anspruch 3, wobei:
das Polymerisieren des 3-Hydroxypropionsäure-Oligomers in dem (Schritt 2) unter einer Druckbedingung von 133 Pa (1 Torr) oder weniger erfolgt.

9. Verfahren zur Herstellung eines Poly(3-hydroxypropionsäure)-Blockcopolymers nach Anspruch 3, wobei:
das Durchführen der Ringöffnungspolymerisation in dem (Schritt 3) bei einer Temperatur von 140 bis 190 °C erfolgt.

10. Harz, umfassend das Poly(3-hydroxypropionsäure)-Blockcopolymer nach Anspruch 1.

11. Harzzusammensetzung, umfassend das Harz nach Anspruch 10.

12. Harzzusammensetzung nach Anspruch 11, wobei:
die Harzzusammensetzung zu einem oder mehreren Harzformkörpern geformt ist, ausgewählt aus der Gruppe, bestehend aus einem Spritzgussformkörper, einem Extrusionsformkörper, einem Blasformkörper, einem Aufblasformkörper, einer Faser, einem Vliesstoff, einem Schaumstoff, einer Folie und einem Film.

13. Gegenstand, umfassend das Poly(3-hydroxypropionsäure)-Blockcopolymer nach Anspruch 1.

## Revendications

1. Copolymère séquencé de poly(acide 3-hydroxypropionique), comprenant:
une unité répétitive de formule chimique 1 suivante, qui est une unité répétitive d'acide 3-hydroxypropionique; et
une unité répétitive de formule chimique 2 suivante, qui est une unité répétitive de lactone,
le nombre d'unités répétitives de la formule chimique 1 est un nombre entier compris entre 100 et 5.000,
le nombre d'unités répétitives de la formule chimique 2 est un nombre entier compris entre 100 et 5.000, et
L dans la formule chimique 2 est un groupe alkyle linéaire ou ramifié ayant 3 à 10 atomes de carbone:

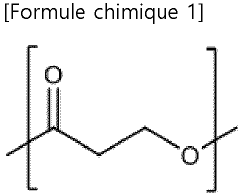

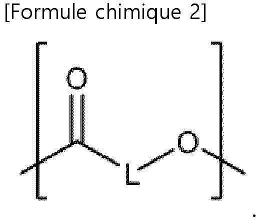

2. Copolymère séquencé de poly(acide 3-hydroxypropionique) selon la revendication 1, dans lequel:
le copolymère séquencé de poly(acide 3-hydroxypropionique) comprend en outre:
une unité répétitive représentée par la formule chimique 3 suivante, qui est une unité répétitive d'un lactide,
le nombre d'unités répétitives de la formule chimique 3 est un nombre entier compris entre 100 et 5.000:

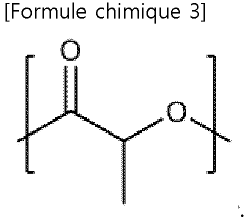

3. Procédé de fabrication d'un copolymère séquencé de poly(acide 3-hydroxypropionique), comprenant les étapes suivantes:
polymériser l'acide 3-hydroxypropionique pour produire un oligomère d'acide 3-hydroxypropionique (étape 1);
polymériser l'oligomère d'acide 3-hydroxypropionique pour produire du poly(acide 3-hydroxypropionique) (étape 2); et
réaliser une polymérisation par ouverture de cycle d'une lactone ayant 3 à 10 atomes de carbone en utilisant le poly(acide 3-hydroxypropionique) comme initiateur (étape 3).

4. Procédé selon la revendication 3, dans lequel:
l'(étape 3) comprend en outre l'ajout d'un lactide en tant que monomère.

5. Procédé selon la revendication 4, dans lequel:
le lactide est inclus en une quantité de 40 parties en poids à 99 parties en poids pour 100 parties en poids du poids total de lactone et de lactide.

6. Procédé selon la revendication 3, dans lequel:
dans l'étape 3, le poly(acide 3-hydroxypropionique) est inclus en une quantité de 50 parties en poids ou moins par rapport à 100 parties en poids du poids total des réactifs.

7. Procédé selon la revendication 3, dans lequel:
la lactone ayant 3 à 10 atomes de carbone de l'étape 3 est au moins une lactone choisie dans le groupe constitué par l'ε-caprolactone, la β-butyrolactone, la β-valérolactone, la γ-butyrolactone, la δ-valérolactone, la γ-valérolactone, le carbonate de triméthylène, p-dioxanone, δ-haxalactone, δ-caprolactone, mévalonolactone, lactone γ-octanoïque et lactone γ-nonanoïque.

8. Procédé selon la revendication 3, dans lequel:
la polymérisation de l'oligomère d'acide 3-hydroxypropionique dans l'(étape 2) est effectuée sous une pression inférieure ou égale à 133 Pa (1 torr).

9. Procédé de fabrication d'un copolymère séquencé de poly(acide 3-hydroxypropionique) selon la revendication 3, dans lequel:
la polymérisation par ouverture de cycle dans l'étape 3 est réalisée à une température comprise entre 140 et 190 °C.

10. Résine comprenant le copolymère séquencé de poly(acide 3-hydroxypropionique) tel que défini dans la revendication 1.

11. Composition de résine, comprenant la résine telle que définie dans la revendication 10.

12. Composition de résine selon la revendication 11, dans laquelle :
la composition de résine est moulée en un ou plusieurs articles moulés en résine choisis dans le groupe constitué par un article moulé par injection, un article moulé par extrusion, un article moulé par soufflage, un article moulé par gonflage, une fibre, un tissu non tissé, une mousse, une feuille et un film.

13. Article comprenant le copolymère séquencé de poly(acide 3-hydroxypropionique)
tel que défini dans la revendication 1.
